# EUROPÄISCHE PATENTSCHRIFT

(11) **EP 1 097 050 B1**
(45) Veröffentlichungstag und Bekanntmachung des Hinweises auf die Patenterteilung: **11.03.2009**
(21) Anmeldenummer: 00927663.5
(22) Anmeldetag: 05.05.2000
(51) Int. Cl.: B60H 1/00

(54) **HEIZSYSTEMKOMPONENTEN**
HEATING SYSTEM COMPONENTS
COMPOSANTS DE SYSTEME DE CHAUFFAGE

(30) Priorität: 11.05.1999 DE 19921812
(43) Veröffentlichungstag der Anmeldung: 09.05.2001
(73) Patentinhaber: Valeo Klimasysteme GmbH, 96476 Rodach (DE)
(72) Erfinder: KHELIFA, Noureddine, D-96450 Coburg (DE); JIRMANN, Horst, D-96450 Coburg (DE)
(74) Vertreter: Lemaire, Marc
(86) Internationale Anmeldenummer: PCT/IB2000/000722
(87) Internationale Veröffentlichungsnummer: WO 2000/068031

(56) Entgegenhaltungen:
- EP-A- 0 888 912
- EP-A- 0 913 281
- DE-A- 3 401 207
- PATENT ABSTRACTS OF JAPAN vol. 014, no. 203 (M-0966), 25. April 1990 (1990-04-25) & JP 02 041917 A (NIPPON DENSO CO LTD), 13. Februar 1990 (1990-02-13)
- PATENT ABSTRACTS OF JAPAN vol. 008, no. 274 (M-345), 14. Dezember 1984 (1984-12-14) & JP 59 143716 A (NIPPON DENSO KK), 17. August 1984 (1984-08-17)

## Beschreibung

Die vorliegende Erfindung betrifft allgemein eine Heizklimaanlage, und insbesondere eine Heizklimaanlage für ein Fahrzeug.

Eine klassische Heizklimaanlage für ein Fahrzeug wird üblicherweise aus einem motorseitigen Kühlmittelkreis und einem Kältemittelkreis gebildet. Zum besseren Verständnis der im nachfolgenden beschriebenen Erfindung soll unter dem Begriff "erster Fluidkreis" der motorseitige Kühlmittelkreis verstanden werden. Bei den herkömmlichen Heizklimaanlagen, wie auch bei der vorliegenden Erfindung, werden unterschiedliche Wärmetauscher, Kondensatoren und Verdampfer verwendet. In der nachfolgenden Beschreibung der Erfindung sowie in den beigefügten Ansprüchen soll der Begriff "Wärmetauscher" verstanden werden als an der Klimatisierung beteiligte Wärmetauscher, Verdampfer und Kondensatoren; anders ausgedrückt sollen unter dem Begriff "Wärmetauscher" nur die unmittelbar an der Klimatisierung beteiligten Komponenten umfasst sein, und nicht Einheiten, die zur Abgabe oder Aufnahme von Wärme zu oder von der Umgebungsluft dienen, wie z. B. ein Kühlkörper, der zur Abführung der Motorabwärme dient.

Unter Berücksichtigung der obigen Definitionen ist also eine herkömmliche Heizklimaanlage aufgebaut aus einem einen ersten Wärmetauscher umfassenden ersten Fluidkreis und einem einen zweiten Wärmetauscher umfassenden zweiten Fluidkreis, wobei üblicherweise der Wärmetauscher des ersten Fluidkreises für Heizzwecke verwendet wird, während der Wärmetauscher des zweiten Fluidkreises üblicherweise als Verdampfer ausgebildet zur Kühlung dient.

Um die Heizleistung solcher Heizklimaanlagen zu verbessern, wurden verschiedene Versuche unternommen, die Heizleistung des ersten Wärmetauschers durch das Vorsehen von zusätzlichen Aggregaten, wie z. B. PTC-Heizregistern, Brennstoffzellen etc. zu erhöhen. Diese Ansätze sind jedoch relativ komplex in der Realisation und verursachen relativ hohe Kosten für die Gesamtinstallation der Heizklimaanlage.

In der US 5,291,941 wurde daher eine Heizklimaanlage vorgeschlagen, bei der der zweite Fluidkreis sowohl zu Kühl- als auch Heizzwecken verwendet werden kann. Als Weiterentwicklung ist in dieser Druckschrift auch eine Heizklimaanlage beschrieben, die drei Fluidkreise umfasst, nämlich einen ersten Fluidkreis, der über einen ersten Wärmetauscher Wärme des Verbrennungsmotors zu Heizzwecken bereitstellt, einen zweiten Fluidkreis, der als klassischer Kältemittelkreis zur Kühlung ausgelegt ist, und einen dritten Fluidkreis, der als thermodynamischer Heizkreis ausgebildet ist. Diese bevorzugte Ausführungsform entspricht dem Oberbegriff des Anspruches

In der gattungsgemäßen JP-A-02 041917 und der EP-A-0 913 281 wurde eine ähnliche Heizklimaanlage vorgeschlagen, in dem drei Wärmetauscher in Serie im Luftkanal angeordnet sind.

Obwohl diese bekannten Heizklimaanlagen eine jeweilige Optimierung der zweiten und dritten Wärmetauscher zu Kühl- bzw. Heizzwecken ermöglichen, hat sich diese Ausführungsform jedoch als unzulänglich bezüglich der aktuell geforderten Ansprechzeiten und Regelmöglichkeiten herausgestellt.

Es ist daher Aufgabe der vorliegenden Erfindung eine gattungsgemässe Klimaanlage, insbesondere für ein Fahrzeug mit einem einen ersten Wärmetauscher umfassenden ersten Fluidkreis, einem einen zweiten Wärmetauscher umfassenden zweiten Fluidkreis und mit einem einen dritten Wärmetauscher umfassenden dritten Fluidkreis in solch einer Weise weiterzubilden, dass kürzere Ansprechzeiten und eine verbesserte Regelfähigkeit bereitgestellt sind.

Erfindungsgemäss wird diese Aufgabe dadurch gelöst, dass der zweite und/oder dritte Wärmetauscher dem ersten Wärmetauscher luftströmungstechnisch nachgeschaltet ist. Im Gegensatz zum Stand der Technik kann also zumindest ein Wärmetauscher dem Wärmetauscher des motorseitigen Kühlmittelkreises lufttrömungstechnisch nachgeschaltet werden, so dass z. B. bei kaltem Motor in der Startphase des Fahrzeuges die Heizleistung des zugeordneten thermodynamischen Heizkreises praktisch sofort zur Verfügung steht, da kein Teil der erzeugten Wärme bei der Aufheizung des ersten Wärmetauschers verloren geht. Insbesondere im Heizbetrieb stellt das Nachschalten eines weiteren Wärmetauschers eines thermodynamischen

Heizkreises eine optimierte Regelmöglichkeit bereit, da über diesen Wärmetauscher eine Endabstimmung der dem Fahrgastraum zuzuführenden Luft erfolgen kann.

Bei einer vorteilhaften Weiterentwicklung der erfindungsgemäßen Heizklimaanlage sind drei Wärmetauscher luftströmungstechnisch in solch einer Weise in Serie angeordnet, daß der erste Wärmetauscher des motorseitigen Fluidkreises zwischen dem zweiten und dritten Wärmetauscher angeordnet ist. Beispielhaft könnte somit die von einem Ventilator beaufschlagte Luft zuerst durch einen für Kühlzwecke vorgesehenen Verdampfer treten, anschließend durch den Wärmetauscher des Kühlmittelkreises und anschließend durch den Wärmetauscher eines thermodynamischen zu Heizzwecken ausgelegten Fluidkreises. Indem der zu Kühlzwecken dienende Wärmetauscher den zu Heizzwecken dienenden Wärmetauschern vorgeschaltet ist, stellt die an dem zu Kühlzwecken dienenden Wärmetauscher entstehende Feuchtebildung auch im Heizmodus kein Problem mehr dar. Diese Feuchtebildung war insbesondere beim Stand der Technik problematisch und hat häufig zu einem Beschlagen der Scheiben im Kraftfahrzeug geführt. Da jedoch die durch den zu Kühlzwecken dienenden Wärmetauscher tretende Luft bei einem relativ niedrigen Temperaturniveau vorliegt, wird diese Luft lediglich wenig Feuchtigkeit aufnehmen, so daß bei einer nachfolgenden Erwärmung mittels des ersten Wärmetauschers des motorseitigen Fluidkreises und der abschließenden Enderwämung mittels des nachgeschalteten Wärmetauschers eines thermodynamischen Fluidkreises die Gesamtluftfeuchte der austretenden Luft vernachlässigbar ist, weshalb ein Beschlagen der Scheiben nicht mehr auftritt. Durch das Bereitstellen eines vorgeschalteten zu Kühlzwecken dienenden Wärmetauschers und eines zu Heizzwecken nachgeschalteten Wärmetauschers bezüglich des ersten Wärmetauschers des motorsietigen Fluidkreises kann desweiteren eine optimierte Auslegung der zweiten und dritten Wärmetauscher erfolgen. Somit können Geräuschentwicklungen vermieden werden, die beim Stand der Technik resultieren, wenn lediglich ein Wärmetauscher neben dem motorseitigen Wärmetauscher zu sowohl Kühl- als auch Heizzwecken verwendet wird.

Vorteilhafterweise sind der oder die nachgeschaltete oder nachgeschalteten Wärmetauscher mit dem ersten Wärmetauscher als eine konstruktive Einheit ausgebildet, wobei insbesondere die jeweiligen Wärmetauscher thermisch voneinander getrennt vorliegen. Durch diese Kombination können in platzsparender Weise die zu Heizzwecken dienenden Wärmetauscher unter Beibehaltung einer thermischen Trennung kombiniert werden.

Um die erforderliche Anzahl an Komponenten, wie z. B. Fluidfördermittel und dergleichen zu reduzieren, ist es bevorzugt, daß der zweite und der dritte Fluidkreis miteinander gekoppelt sind, wobei insbesondere ein Fluidkreis einen Bypass bezüglich des anderen Fluidkreises darstellt. In dieser Weise können die zwei thermodynamischen Fluidkreise zu einem Gesamtkreis kombiniert werden, welcher mittels geeigneter Steuerelemente wahlweise zum Heizen und/oder zum Kühlen verwendet werden kann. Ein Vorteil der bypass-artigen Ausgestaltung besteht darin, daß eine Umkehr beim Wechseln zwischen Kühl- und Heizbetrieb nicht mehr erforderlich ist.

Vorteilhafterweise sind im Übergangsbereich zwischen dem zweiten und dritten Fluidkreis Fluidströmungs- und/oder -zustandssteuermittel vorgesehen, die zum einen dazu dienen können, den jeweiligen Modus zwischen Heizen und Kühlen umzuschalten und zum anderen als Leistungssteuerung für den entsprechenden Betriebsmodus. Die Fluidströmungssteuermittel und die Fluidzustandssteuermittel können als kombinierte Aggregate ausgebildet sein, z. B. in der Form eines Dreiwegeventiles, wobei ein Auslaß als Drossel ausgebildet ist, oder auch als separate Aggregate, z. B. Stellventile in Verbindung mit separaten Drosselstellen, z. B. in der Form eines Drosselventiles oder auch einer Leitungsquerschnittsverjungung.

Bei einer besonders vorteilhaften Ausführungsform ist zumindest ein Fluidströmungs-und/oder -zustandssteuermittel in solch einer Weise ausgeführt, daß es sowohl die Fluidströmung als auch den Fluidzustand beeinflussen kann, z. B. als Drossel ausgebildet, wobei es besonders vorteilhaft ist, wenn die Drosselfunktion dadurch erreicht wird, daß eine zwei- oder mehrstufige Drossel ausgebildet wird. Bei der mehrstufigen Ausbildung könnte z. B. ein großer Widerstand gewählt werden, wenn der thermodynamische Fluidkreis aufgeheizt wird, und umgeschaltet werden auf einen Zustand mit geringem Widerstand, wenn die zur Erzielung der gewünschten Heizleistung erforderliche Wärme ausreichend ist.

Um die Regelfähigkeit beim Umschalten zwischen Kühl- und Heizmodus noch weiterzuverbessern, kann es vorteilhaft sein, für die einzelnen Fluidkreise separate Steuermittel vorzusehen, z. B. in der Form von einfachen Sperrventilen oder auch über ein Rückschlagventil, welches optional mit einem Temperaturregler versehen sein kann.

Um das Ansprechverhalten der erfindungsgemäßen Heizklimaanlage weiterzuverbessem, kann zumindest einem Wärmetauscher ein Luftstromsteuermittel vorgeschaltet sein, insbesondere zum Vorbeiführen bzw. Durchleiten von Luft bezüglich des in Frage stehenden Wärmetauschers. Anders ausgedrückt sind bei dieser Ausgestaltung Mittel vorgesehen, um einen Luftbypass für einen oder mehrere Wärmetauscher bereitzustellen. Im Kühlmodus wäre es z. B. vorteilhaft, die Luft ausschließlich durch den Verdampfer bzw. den zu Kühlzwecken dienenden Wärmetauscher zu führen, ohne daß die zu Heizzwecken dienenden Wärmetauscher durchströmt werden, welche ggf. noch eine gewisse Menge an Restwärme gespeichert haben können. Wenn nun vom Kühlmodus auf den Heizmodus umgeschaltet wird, könnte das Durchströmen des zu Kühlzwecken dienenden Wärmetauschers verhindert werden, so daß die Luft ausschließlich durch die zu Heizzwecken dienenden Wärmetauscher strömt. Demzufolge wird die zur Verfügung stehende Heizleistung nicht durch die Restkälte in dem zu Kühlzwekken dienenden Wärmetauscher beeinträchtigt. Das Ansprechverhalten wird somit deutlich verbessert, zumal ggf. noch eine Restwärme in den zu Heizzwecken dienenden Wärmetauschern vorliegen kann, nachdem diese im Kühlmodus nicht gekühlt wurden.

Schließlich ist es bevorzugt, daß in zumindest einem Wärmetauscher ein Phasenübergang des Fluides stattfindet. Anders ausgedrückt sollte zumindest ein Wärmetauscher als Verdampfer oder Kondensator ausgebildet sein, so daß der Fluidkreis dieses Wärmetauschers als thermodynamischer Heiz- oder Kühlkreis anzusehen ist.

Weitere Vorteile und Merkmale der vorliegenden Erfindung ergeben sich aus der folgenden detaillierten Beschreibung einiger derzeit bevorzugter rein illustrativer Ausführungsformen, welche unter Bezugnahme auf die beigefügten Zeichnungen erfolgt, in welchen gilt:
Fig. 1 zeigt eine erste bevorzugte Ausführungsform der erfindungsgemäßen Heizklimaanlage, bei welcher drei diskrete Fluidkreise vorgesehen sind.
Fig. 2 zeigt eine zweite bevorzugte Ausführungsform der erfindungsgemäßen Heizklimaanlage , wobei zwei Fluidkreise miteinander kombiniert oder gekoppelt sind.
Fig. 3 zeigt eine weitere bevorzugte Ausführungsform, ähnlich zu der in Fig. 2 gezeigten Ausführungsform, wobei an der Klimatisierung beteiligte Wärmetauscher in Serie angeordnet sind.
Fig. 4 zeigt zwei Wärmetauscher, welche als konstruktive Einheit miteinander kombiniert sind und einen Bestandteil einer bevorzugten Ausführungsform der Erfindung bilden.
Fig. 5 zeigt eine Detailansicht von in Serie angeordneten Wärmetauschern mit zugeordneten Luftstromsteuermitteln.
Fig. 6a bis e zeigen verschiedene Möglichkeiten von Fluidströmungs- und/oder zustandssteuermitteln bei gekoppelten Fluidkreisen.
Fig. 7 zeigt schematisch die thermodynamischen Fluidkreise einer insbesondere bevorzugten Ausführungsform der erfindungsgemäßen Heizklimaanlage.

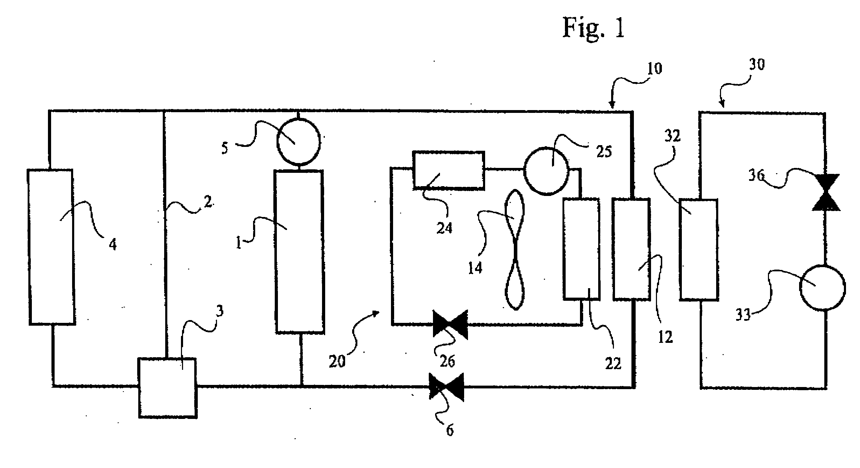

In Fig. 1 ist eine erste bevorzugte Ausführungsform der erfindungsgemäßen Heizklimaanlage schematisch dargestellt. Die Heizklimaanlage umfaßt einen einen ersten Wärmetauscher 12 umfassenden ersten Fluidkreis 10. Dieser erste Fluidkreis 10 stellt den motorseitien Kühlmittelkreis dar, der z. B. zur Kühlung eines Verbrennungsmotors 1 dienen kann. Der erste Fluidkreis 10 ist mit seinen Bestandteilen klassisch und umfaßt neben dem zu Heizzwecken dienenden Wärmetauscher 12 Fluidfördermittel 5, eine mittels Thermostat 3 gesteuerte Bypassleitung 2 sowie einen mit der Umgebungsluft wechselwirkenden Kühlkörper 4. Um den Wärmetauscher 12 luftströmungstechnisch beaufschlagen zu können, ist ein Ventilator oder Gebläse 14 vorgesehen.

Bei einigen Fahrzuständen, insbesondere nach einem Kaltstart, wird die durch den Wärmetauscher 12 bereitgestellte Heizleistung nicht ausreichen, um den Fahrzeuginnenraum auf eine gewünschte Temperatur zu bringen. Daher ist bei der gezeigten Ausführungsform luftströmungstechnisch dem Wärmetauscher 12 ein weiterer Wärmetauscher 32 nachgeschaltet, welcher in der folgenden Beschreibung als dritter Wärmetauscher 32 identifiziert wird. Der dritte Wärmetauscher 32 wird über einen thermodynamischen Heizkreis 30 versorgt, der in üblicher Weise Fluidbeaufschlagungsmittel 33 und Fluidentspannungsmittel 36 umfaßt. Durch das Nachschalten des dritten Wärmetauscher 32 kann dementsprechend die eingestellte Heizleistung regeltechnisch optimiert werden, wobei z. B. nach einem Kaltstart ein verbessertes Ansprechverhalten dadurch erreicht werden kann, daß der dritte Wärmetauscher 32 Wärme bereitstellen kann, selbst wenn der Wärmetauscher 12 des ersten Fluidkreises noch kalt ist.

Um bei Bedarf auch eine Klimatisierung oder ggf. auch eine Luftentfeuchtung erzielen zu können, ist dem ersten Wärmetauscher 12 ein zu Kühlzwecken dienender Wärmetauscher 22 luftströmungstechnisch vorgelagert. Dieser zu Kühlzwecken dienende Wärmetauscher 22 soll im folgenden als zweiter Wärmetauscher 22 definiert sein und wird in herkömmlicher Weise meist als Verdampfer ausgebildet sein. Der zweite Wärmetauscher 22 wird über einen zweiten thermodynamischen Fluidkreis versorgt, welcher in an und für sich üblicher Weise Fluidförder- und/oder -beaufschlagungsmittel 25 und Fluidentspannungs- bzw. -drosselmittel 26 umfaßt. Ggf. kann der zweite Fluidkreis 20 auch noch einen Kühlkörper 24 umfassen, der dazu dient, Wärme an die Umgebungsluft abzugeben, die im reinen Kühlbetrieb nicht zur Temperierung des Fahrgastraumes benötigt wird. Dieser Kühlkörper 24 wird in üblicher Weise als Kondensator ausgebildet sein.

Durch das In-Serie-Anordnen von Wärmetauschern in der Reihenfolge zweiter Wärmetauscher 22, erster Wärmetauscher 12, dritter Wärmetauscher 32 wird eine optimale Temperierung der in den Fahrgastraum zu führenden Luft erreicht. In der hier dargestellten Ausführungsform wird die Temperierung der Luft ausschließlich mittels fluidtechnischer Steuerung der drei Fluidkreise erzielt, wobei jedoch auch zusätzlich Luftstromsteuermittel vorgesehen sein können, wie später in der vorliegenden Beschreibung diskutiert.

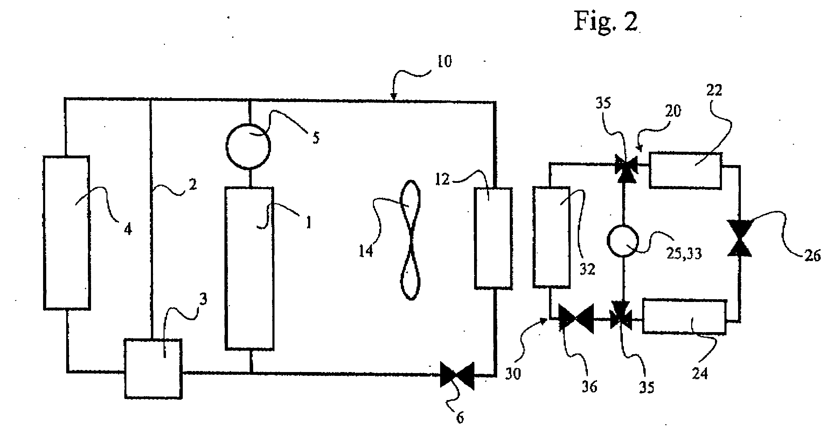

Es läßt sich feststellen, daß das Nachschalten des dritten Wärmetauschers eine opitmierte Auslegung des Wärmetauschers auf das Fluid zu Heizzwecken ermöglicht, wobei zusätzlich eine Nacherwärmung und somit optimierte Tempereierung der in den Fahrgastraum tretenden Luft erzielt werden kann. Somit lassen sich Geräuschentwicklungsprobleme eliminieren, die beim Stand der Technik resultieren, wenn lediglich ein Wärmetauscher zu Kühl- und Heizzwecken verwendet wird. Die vorgeschaltete Anordnung des zweiten Wärmetauschers bezüglich des ersten Wärmetauschers 12 ermöglicht es, die in den Fahrgastraum tretende Luft in geeigneter Weise zu kühlen, wobei ein Umschalten von Kühlmodus auf Heizmodus problemlos möglich ist, ohne daß die an dem zweiten Wärmetauscher 22 vorliegende Feuchtigkeit ein Problem darstellen würde. Die luftströmungstechnische Vorschaltung des zweiten Wärmetauschers 22 stellt zwar bauraumtechnisch eine optimierte Lösung bereit, es ist jedoch auch möglich, den zur Kühlung dienenden Wärmetauscher 22 in einem separaten Kanal oder parallel zum ersten Wärmetauscher 12 vorzusehen. Solch eine Ausführungsform ist in Fig. 2 dargestellt.

Bei der in Fig. 2 dargestellten Ausführungsform sind der zweite Fluidkreis 20 und der dritte Fluidkreis 30 als ein gekoppelter Fluidkreis dargestellt, so daß für beide Kreise lediglich ein Fluidförder- und/oder -beaufschlagungsmittel 25 erforderlich ist. Wie dargestellt bildet der dritte Fluidkreis mit dem zur Nachtemperierung dienenden Wärmetauscher 32 bezüglich dem zweiten Fluidkreis 20 einen Bypass. Zur Umschaltung zwischen Heiz- und Kühlmodus werden einfach z. B. zwei Dreiwegeventile 35 betätigt, um den zweiten Fluidkreis 20 oder den dritten Fluidkreis 30 zu beaufschlagen. Es sollte erwähnt werden, daß wenn eine gebisse Luftentfeuchtung gewünscht ist, auch ein Mischbetrieb erfolgen kann. Anders ausgedrückt werden die Stellventile 35 derart eingestellt, daß sowohl der Wärmetauscher 32 als auch der Wärmetauscher 22 mit Fluid versorgt werden, einerseits um eine Abkühlung zur Lufttrocknung bereitzustellen und andererseits um eine Erwärmung bereitzustellen, die dazu dient, die in den Fahrgastraum tretende Luft unmittelbar vor dem Austritt auf eine gewünschte Temperatur zu erhöhen.

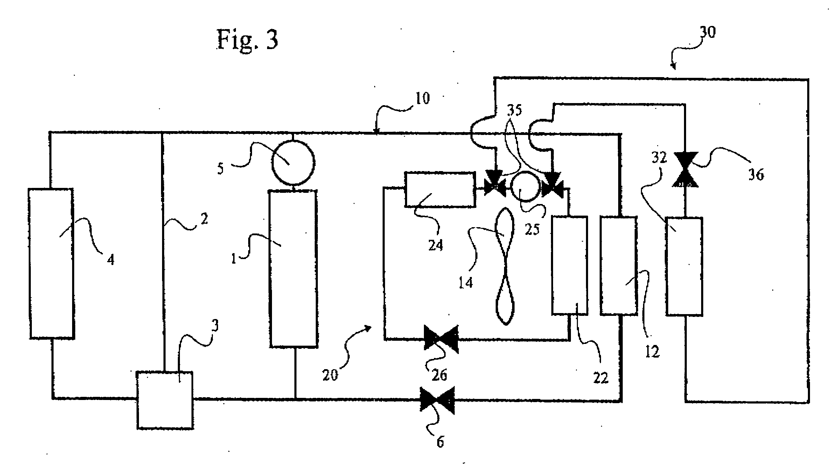

In Fig. 3 ist eine dritte bevorzugte Ausführungsform dargestellt, welche vom Aufbau im wesentlichen der in Fig. 2 dargestellten Ausführungsform entspricht. Wie bei der in Fig. 2 dargestellten Ausführungsform sind die zwei thermodynamischen Fluidkreise 20 und 30 miteinander gekoppelt, wobei jedoch in dieser Ausführungsform die Wärmetauscher 22, 12, 32 in Serie angeordnet sind, und zwar ähnlich wie bei der in Fig. 1 dargestellten Ausführungsform. Dementsprechend lassen sich kombiniert die Vorteile der in den Fig. 1 und 2 gezeigten Ausführungsformen erzielen.

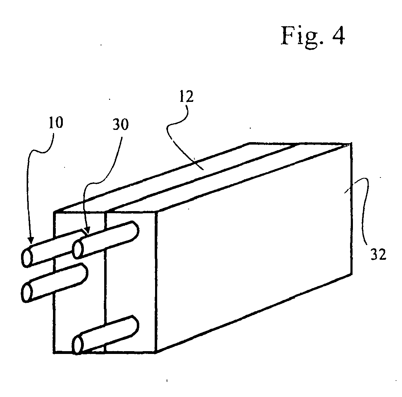

In Fig. 4 sind der erste Wärmetauscher 12 und der dritte Wärmetauscher 32, d. h. die beiden zu Heizzwecken dienenden Wärmetauscher als eine kombinatorische Einheit dargestellt, wobie die Einheit konstruktiv in solch einer Weise vorliegt, daß eine thermische Entkopplung zwischen den beiden Wärmetauschern besteht. Diese Anordnung der Wärmetauscher in der Form eines Tandemradiators ermöglicht einen platzsparenden Einbau. Wie es in Fig. 4 dargestellt ist, kann eine weitere thermische Entkopplung dadurch stattfinden, daß die Zufuhrleitungen für Kühlmittel bzw. Kältemittel versetzt zueinander vorgesehen sind.

Die Form des Tandemradiators kann jedoch auch in anderer geeigneter Weise gestaltet werden, z.B. als Hohlkörper, der segmentartig, abschnittweise oder wie oben genannt thermisch getrennt und parallel verlaufend im Gleich- oder Gegenstrom von den entsprechenden Fluidkreisen beaufschlagt wird.

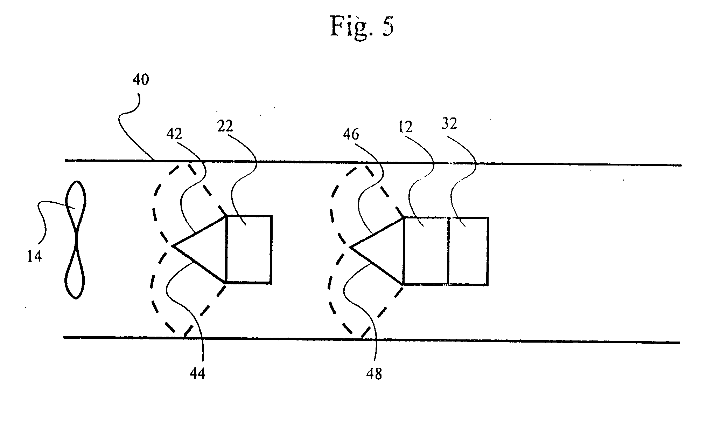

In Fig. 5 ist die In-Serie-Anordnung der Wärmetauscher 22, 12, 32 in Verbindung mit Luftstromsteuermitteln dargestellt, die es ermöglichen, Luft durch die jeweiligen Wärmetauscher zu führen bzw. an diesen vorbeizuführen. Durch diese Anordnung kann die fluidseitige Steuerung unterstützt oder ersetzt werden, wobei in jedem Fall eine Verbesserung des Ansprechverhaltens erzielt wird, da jeweils Restwärme und Restkälte in den jeweiligen Wärmetauschern bei Nichtnutzung verbleiben können. Strömungstechnisch sind in einem Kanal 40 dem Lüfter 14 nachgeschaltet, der zu Kühlzwecken dienende Wärmetauscher 22 und die als kombinatorische Einheit vorgesehenen zu Heizzwecken dienenden Wärmetauscher 12 und 32. Dem zu Kühlzwecken dienenden Wärmetauscher 22 sind zwei Steuerklappen 42 und 44 vorgelagert, die wie dargestellt eine Beaufschlagung des Wärmetauschers 22 ermöglichen oder verhindern können. Dementsprechend wird entweder die Luft durch den Wärmetauscher 22 hindurchgeführt oder bypassmäßig an diesem vorbeigeleitet. In entsprechender Weise ist der kombinatorischen Einheit aus den zwei zu Heizzwecken dienenden Wärmetauscher 12, 32 ein Luftstromsteuermittel mit zwei Klappen 46 und 48 vorgelagert, so daß die Luft veranlaßt werden kann, durch diese Wärmetauscher zu treten bzw. an diesen vorbeigeführt zu werden. Indem die Beaufschlagung der einzelnen Wärmetauscher selektiv je nach Betriebsmodus gewählt werden kann, kann die Ansprechfähigkeit des Gesamtsystemes deutlich verbessert werden, insbesondere da beim Kühlen die in den zu Heizzwecken dienenden Wärmetauschern 12, 32 enthaltene Restwärme die Kühlleistung nicht beeinträchtigt, während beim Heizen der zu Kühlung dienende Wärmetauscher 22 nicht erst erwärmt werden muß. Beim Umschalten zwischen Kühl- und Heizmodus kann somit vorteilhafterweise die verbleibende Restwärme bzw. Restkälte sofort ausgenutzt werden.

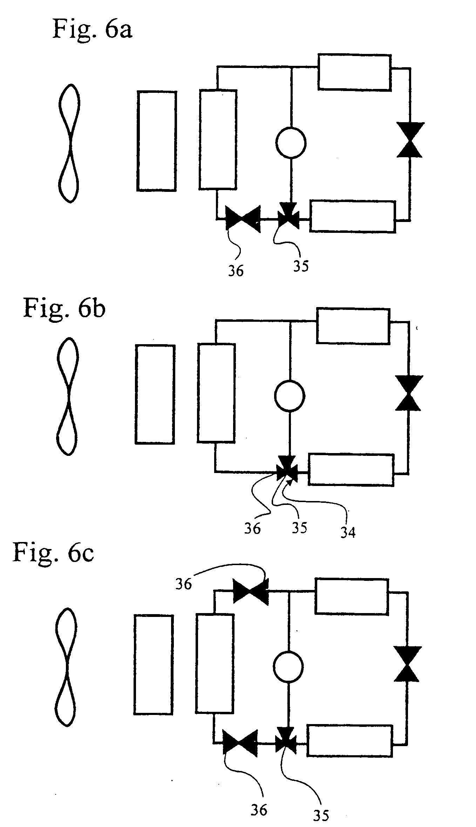

In den Fig. 6a bis e sind unterschiedliche Möglichkeiten dargestellt, wie der zu Kühlzwecken dienende thermodynamische zweite Fluidkreis 20 und der zu Heizzwecken dienende dritte Fluidkreis 30, die miteinander gekoppelt werden können, wobei insbesondere unterschiedliche Möglichkeiten für die Entspannung des Fluides im dritten thermodynamischen Heizkreis 30 dargestellt sind.

In Fig. 6a ist fluidströmungstechnisch dem Fluidfördermittel bzw. -verdichter 25 ein Dreiwegeventil 35 nachgeschaltet, welches wahlweise einen der Fluidkreise 20, 30 oder auch anteilsmäßig beide Fluidkreise 20, 30 beaufschlagen kann. Für den zu Heizzwecken dienenden dritten Fluidkreis 30 ist dem Dreiwegeventil 35 eine Drosselstelle 36 in der Form eines Entspannungsventiles nachgeordnet. Weiter flußabwärts liegend ist der dritte Wärmetauscher 32 vorgesehen, der als Nachheizer für den motorseitigen Fluidkreiswärmetauscher dient. An der Schnittstelle zu dem zu Kühlzwecken dienenden zweiten Fluidkreis 20 ist ferner ein Rückschlagventil vorgesehen.

Bei der in Fig. 6b gezeigten Ausführungsform sind die Drosselstelle 36 und das Dreiwegeventil 35 zu einer Einheit 34 kombiniert, in dem der zu dem dritten Fluidkreis 30 gerichtete Auslaß als Drossel verwendet wird.

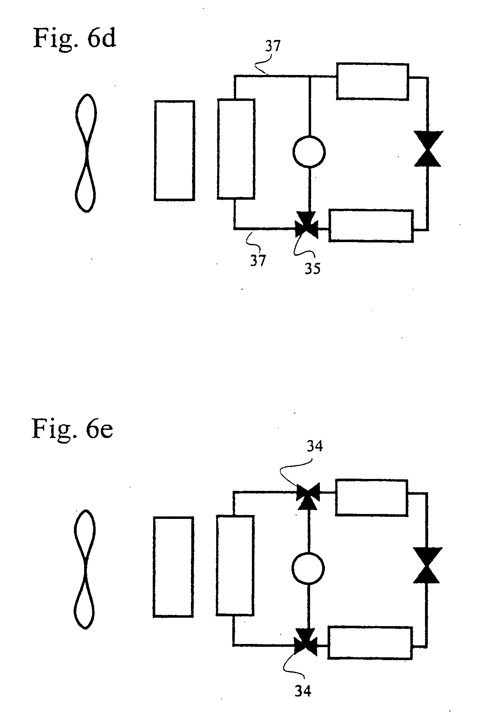

Bei den in den Fig. 6c und 6d dargestellten Ausführungsformen wird die Drosselfunktion durch zwei Ventile 36 bzw. durch Schläuche oder Leitungen mit reduziertem Durchmesser 37 erzielt, wobei eine entsprechende Drosselung des zu Heizzwecken verwendeten Fluides beidseitig des Wärmetauschers 32 erfolgen kann.

Bei der in Fig. 6e gezeigten Ausführungsform sind beidseitig des Fluidförder- bzw. - beaufschlagungsmittels 25 zwei Dreiwegeventile vorgesehen, deren jeweiliger Ein- bzw. Auslaß hin zu dem dritten Fludikreis 30 als Drosselstellen ausgebildet sind.

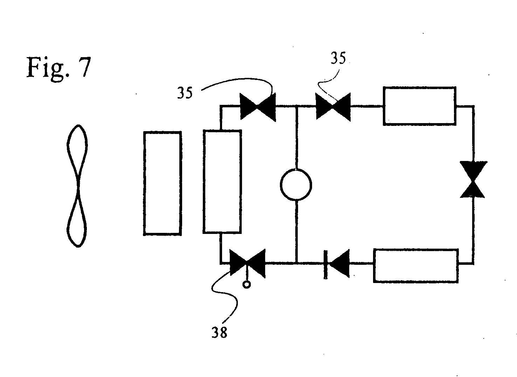

Fig. 7 zeigt schließlich eine weitere mögliche Kombination zwischen dem zweiten und dritten thermodynamische Fluidkreis 20, 30, in einer Darstellung im wesentlichen jener von Fig. 2 entsprechend. Um die Regelfähigkeit zu erhöhen, ist in der hier dargestellten Ausführungsform dem Verdichter 25 ein Paar von Stellventilen 35 für die jeweiligen Fluidkreise nachgeschaltet. In der hier dargestellten Ausführungsform ist dem zu Heizzwecken dienenden Wärmetauscher 32 eine zweistufige Drossel nachgeschaltet, die über einen geringen Widerstand verfügt, wenn die in dem thermodynamischen Heizkreis 30 vorliegende Wärme ausreichend ist. In der Aufheizphase, z. B. nach einem Kaltstart des Fahrzeuges, kann der Widerstand auf groß eingestellt werden, so daß mittels der Drossel 38 mit hohem Widerstand eine zügige Aufheizugn erfolgen kann. Demzufolge kann bereits kurze Zeit nach dem Starten mittels des Wärmetauschers 32 Wärme für die Fahrgastrauminnenbeheizung zur Verfügung gestellt werden, so daß praktisch unmittelbar nach dem Start eine zufriedenstellende Heizfunktion erfüllt werden kann.

Zusammenfassend läßt sich feststellen, daß mit der erfindungsgemäßen Lösung eine Heizklimaanlage bereitgestellt wird, die im wesentlichen unabhängig von Außenbedingungen und Zuständen in dem System ein schnelles Ansprechen auf unterschiedlichste Einstellungen ermöglicht. Im Gegensatz zu anderen Ansätzen, wie bei Verwendung von PTC-Heizregistern oder Brennstoffzellen, sind bei der vorgeschlagenen Lösung ausschließlich thermodynamische bekannte Komponenten erforderlich, wobei die Anzahl an erforderlichen Teilen vorteilhafterweise noch reduziert werden kann, wenn die thermodynamischen Fluidkreise miteinander gekoppelt oder verbunden sind. Somit wird eine optimierte Regelfähigkeit des Gesamtsystemes bereitgestellt, ohne daß ein übermäßiger Raumbedarf bestehen würde.

## Patentansprüche

1. Heizklimaanlage, insbesondere für ein Fahrzeug, mit
einem einen ersten Wärmetauscher (12) umfassenden, zu Heizzwecken dienenden ersten Fluidkreis (10), einem einen zweiten Wärmetauscher (22) umfassenden, zu Kühlzwecken dienenden zweiten Fluidkreis (20),
**dadurch gekennzeichnet dass** die Heizklimaanlage weiter unfasst einen einen dritten Wärmetauscher (32) umfassenden, zu Heizzwecken dienenden dritten Fluidkreis (30), Fluidbeaufschlagungsmittel (33), und Fluidentspannungsmittel (36) wobei der dritte Wärmetauscher (32) dem ersten Wärmetauscher (12) luftströmungstechnisch nachgeschaltet ist.

2. Heizklimaanlage nach Anspruch 1, **dadurch gekennzeichnet, dass** der zweite oder der dritte Wärmetauscher (32) dem ersten Wärmetauscher (12) luftströmungstechnisch nachgeschaltet ist, wobei der andere Wärmetauscher (32) dem ersten Wärmetauscher (12) vorgeschaltet oder vorschaltbar ist.

3. Heizklimaanlage nach Anspruch 1 oder 2, **dadurch gekennzeichnet, dass** der nachgeschaltete Wärmetauscher (32) mit dem ersten Wärmetauscher (12) eine konstruktive Einheit bildet, wobei insbesondere die jeweiligen Wärmetauscher (12, 32) thermisch voneinander getrennt vorliegen.

4. Heizklimaanlage nach einem der vorangegangenen Ansprüche, **dadurch gekennzeichnet, dass** der zweite und der dritte Fluidkreis (20, 30) miteinander gekoppelt sind, wobei insbesondere ein Fluidkreis (20, 30) einen Bypass bezüglich des anderen Fluidkreises (20, 30) bildet.

5. Heizklimaanlage nach Anspruch 4, **dadurch gekennzeichnet, dass** im Übergangsbereich zwischen dem zweiten und dritten Fluidkreis (20, 30) Fluidströmungs- und/oder - zustandsteuermittel (31; 34; 35, 36; 35, 37, 38) vorgesehen sind.

6. Heizklimaanlage nach Anspruch 5, **dadurch gekennzeichnet, dass** zumindest ein Fluidströmungs- und/oder -zustandssteuermittel (31; 34; 35, 36; 35, 37, 38) eine Drosselfunktion erfüllt, insbesondere als zwei- oder mehrstufige Drossel (38) ausgebildet.

7. Heizklimaanlage nach einem der vorangegangenen Ansprüche, **dadurch gekennzeichnet, dass** zumindest einem Wärmetauscher (12, 22, 32) ein Luftstromsteuermittel vorgeschaltet ist, insbesondere zum Vorbeiführen bzw. Durchleiten von Luft bezüglich des in Frage stehenden Wärmetauschers (12, 22, 32).

8. Heizklimaanlage nach einem der vorangegangenen Ansprüche, **dadurch gekennzeichnet, dass** in zumindest einem Wärmetauscher (12, 22, 32) ein Phasenübergang des Fluides stattfindet.

## Claims

1. Heating and air-conditioning system, in particular for a vehicle, having a first fluid circuit (10) which comprises a first heat exchanger (12) and which serves for heating purposes, a second fluid circuit (20) which comprises a second heat exchanger (22) and which serves for cooling purposes, **characterized in that** the heating and air-conditioning system also comprises a third fluid circuit (30) which comprises a third heat exchanger (32) and which serves for heating purposes, fluid pressurization means (33) and fluid expansion means (36), with the third heat exchanger (32) being connected downstream of the first heat exchanger (12) in terms of air flow.

2. Heating and air-conditioning system according to Claim 1, **characterized in that** the second or the third heat exchanger (32) is connected downstream of the first heat exchanger (12) in terms of air flow, wherein the other heat exchanger (32) is or can be connected upstream of the first heat exchanger (12).

3. Heating and air-conditioning system according to Claim 1 or 2, **characterized in that** the heat exchanger (32) which is connected downstream forms a structural unit with the first heat exchanger (12), with the respective heat exchangers (12, 32) in particular being thermally separate from one another.

4. Heating and air-conditioning system according to one of the preceding claims, **characterized in that** the second and the third fluid circuits (20, 30) are coupled to one another, wherein in particular, one fluid circuit (20, 30) forms a bypass with respect to the other fluid circuit (20, 30).

5. Heating and air-conditioning system according to Claim 4, **characterized in that** fluid flow and/or state control means (31; 34; 35, 36; 35, 37, 38) are provided in the transition region between the second and third fluid circuits (20, 30).

6. Heating and air-conditioning system according to Claim 5, **characterized in that** at least one fluid flow and/or state control means (31; 34; 35, 36; 35, 37, 38) performs a throttling function, and is in particular embodied as a two-stage or multistage throttle (38).

7. Heating and air-conditioning system according to one of the preceding claims, **characterized in that** at least one heat exchanger (12, 22, 32) has connected upstream of it an air flow control means, in particular for guiding air past or conducting air through the respective heat exchanger (12, 22, 32).

8. Heating and air-conditioning system according to one of the preceding claims, **characterized in that** a phase transition of the fluid takes place in at least one heat exchanger (12, 22, 32).

## Revendications

1. Installation de climatisation et de chauffage, en particulier pour un véhicule, comprenant un premier circuit de fluide (10) comprenant un premier échangeur de chaleur (12) et servant à des fins de chauffage, un deuxième circuit de chauffage (20) comprenant un deuxième échangeur de chaleur (22) et servant à des fins de refroidissement, **caractérisée en ce que** l'installation de climatisation et de chauffage comprend en outre un troisième circuit de fluide (30) comprenant un troisième échangeur de chaleur (32) et servant à des fins de chauffage, des moyens de sollicitation de fluide (33), et des moyens de détente de fluide (36), le troisième échangeur de chaleur (32) étant monté après le premier échangeur de chaleur (12) dans le sens d'écoulement des flux d'air.

2. Installation de climatisation et de chauffage selon la revendication 1, **caractérisée en ce que** le deuxième ou le troisième échangeur de chaleur (32) est monté après le premier échangeur de chaleur (12), technique des flux d'air, l'autre échangeur de chaleur (32) étant monté avant, ou pouvant être monté avant le premier échangeur de chaleur (12).

3. Installation de climatisation et de chauffage selon la revendication 1 ou 2, **caractérisée en ce que** l'échangeur de chaleur (32), monté après, forme avec le premier échangeur de chaleur (12) une unité constructive, et notamment les échangeurs de chaleur respectifs (12, 32) se présentent sous forme thermiquement séparée l'un de l'autre.

4. Installation de climatisation et de chauffage selon l'une quelconque des revendications précédentes, **caractérisée en ce que** le deuxième et le troisième circuit de fluide (20, 30) sont accouplés l'un à l'autre, un circuit de fluide (20, 30) formant notamment une dérivation par rapport à l'autre circuit de fluide (20, 30).

5. Installation de climatisation et de chauffage selon la revendication 4, **caractérisée en ce que** dans la région de transition entre le deuxième et le troisième circuit de fluide (20, 30), on prévoit des moyens d'écoulement fluidique et/ou de commande d'état (31 ; 34 ; 35, 36 ; 35, 37, 38).

6. Installation de climatisation et de chauffage selon la revendication 5, **caractérisée en ce qu'**au moins un moyen d'écoulement fluidique et/ou de commande d'état (31 ; 34 ; 35, 36 ; 35, 37, 38) satisfait une fonction d'étranglement, et en particulier est réalisé sous forme de papillon d'étranglement (38) à deux ou plusieurs étages.

7. Installation de climatisation et de chauffage selon l'une quelconque des revendications précédentes, **caractérisée en ce qu'**un moyen de commande de flux d'air est monté avant au moins un échangeur de chaleur (12, 22, 32), en particulier pour faire passer de l'air devant ou à travers l'échangeur de chaleur en question (12, 22, 32).

8. Installation de climatisation et de chauffage selon l'une quelconque des revendications précédentes, **caractérisée en ce qu'**une transition de phase du fluide a lieu dans au moins un échangeur de chaleur (12, 22, 32).
